# EUROPEAN PATENT APPLICATION

(11) **EP 3 840 215 A1**
(43) Date of publication of application: **23.06.2021**
(21) Application number: 19306728.7
(22) Date of filing: 20.12.2019
(51) Int. Cl.: H02S 40/42, F28F 3/00

(54) **HEAT SINK AND ASSOCIATED BIFACIAL SOLAR PANEL**

(71) Applicant: TOTAL SE, 92400 Courbevoie (FR)
(72) Inventor: HARDER, Nils, 75014 Paris (FR); BAINIER, Camille, 92330 Sceaux (FR)
(74) Representative: Croonenbroek, Thomas Jakob

(57) **Abstract**

The present invention refers to a heat sink (5) for bifacial photovoltaic modules (3) configured to be secured to the back side (3b) of the at least one bi-facial photovoltaic module (3) wherein the heat sink (5) comprises at least one fin (11) which extends outward from the back side (3b) and is distributed over a first area corresponding to the back side (3b) of the at least one bi-facial photovoltaic module (3) wherein the contact surface between the fin (11) and the back side (3b) corresponds to a fraction of the first area, said fraction being less than 50% of the first area, preferably less than 20%, and wherein the at least one fin (11) has a thermal conductivity higher than 10 W.m-1.K-1.

## Description

### Background of the invention

The field of the present invention refers to the photovoltaic energy production and in particular to the heat dissipation of solar panels and more particularly bi-facial solar panels configured for receiving solar rays both on the front face and the back face of the solar panel.
The yield of solar panels depends on their temperature and tends to largely decrease when the temperature of the solar panel exceeds a given temperature threshold.

To overcome this yield reduction, it is well known to use heat dissipation elements to limit the increase of temperature of the solar panel.
Different techniques are known in the state of the art, especially active solutions referring for example to the spraying of a liquid on the solar panel, an air ventilation or a fluid circulation in contact or in proximity with the solar panels. There is also passive solutions such as heat sinks, for example by attaching a metal sheet onto the rear side of the module with fins extending into the ambient air to facilitate the heat transfer from the module into the ambient air.
However, most of these solutions are difficult or even impossible to adapt on bi-facial solar panels for which light must be able to reach the front and the back sides of the solar panel. Furthermore, some solutions may be difficult or impossible to adapt to solar panels located in areas without energy supply or fluid supply such as solar farms located in desert areas.
It is furthermore advantageous to provide a solution that is adaptable to any kind of solar panels without requiring an adaptation of the photovoltaic module on which the solution is positioned. Such adaptability of the solution to standard solar photovoltaic (PV) modules allows to apply the solution to all types of photovoltaic modules. Such adaptability furthermore allows to equip PV modules retrospectively after production of the module, and hence avoiding to dedicate certain PV module production volumes to this solution in advance.

The present invention aims therefore at providing an equipment enabling heat dissipation which can be adapted on most bi-facial solar panels and which can be used in most conditions in order to improve the yield of bi-facial solar panels.

### Summary of the invention

The present invention refers to a heat sink for bifacial photovoltaic modules configured to be secured to the back side of the at least one bi-facial photovoltaic module wherein the heat sink comprises at least one fin which extends outward from the back side and is distributed over a first area corresponding to the back side of the at least one bi-facial photovoltaic module wherein the contact surface between the at least one fin and the back side corresponds to a fraction of the first area, said fraction being less than 50% of the first area, preferably less than 20%, and wherein the at least one fin has a thermal conductivity higher than 10 W.m-1.K-1
According to an aspect of the present invention, the distribution of the at least one fin is achieved so that any point of the back side is located at a distance shorter than twice the average height of the at least one fin from the at least one fin when the heat sink is secured to the back side of the at least one bi-facial photovoltaic module.

According to a further aspect of the present invention, the at least one fin comprises a reflective surface configured for reflecting light in a specular manner.

According to a further aspect of the present invention, the at least one fin is arranged so that portions of the at least one fin having a common general direction in the plane of the back side extend outwardly from the back side with the same tilt with a tolerance of 10° when the heat sink is secured to the back side of the at least one bi-facial photovoltaic module.

According to another aspect of the present invention, the at least one fin comprises portions that are disposed parallel to each other.

According to a further aspect of the present invention, the at least one fin extends from the back side of the bi-facial photovoltaic module with an angle comprised between 80 and 100° with respect to the back side when the heat sink is secured to the back side of the at least one bi-facial photovoltaic module.

According to another aspect of the present invention, the at least one fin comprises a flattened portion configured to be in contact with the back side of the at least one bi-facial photovoltaic module to increase the contact surface between the heat sink and the back side.

According to a further aspect of the present invention, the at least one fin comprises a plurality of through holes distributed over the surface of the at least one fin.

According to a further aspect of the present invention, the at least one fin forms a grid.

According to a further aspect of the present invention, the at least one fin (11) is metallic.

The present invention also refers to a bifacial solar panel comprising at least one bifacial photovoltaic module and a heat sink configured to be secured to the back side of the at least one bi-facial photovoltaic module wherein the heat sink comprises at least one fin which extends outward from the back side and is distributed over a first area corresponding to the back side of the at least one bi-facial photovoltaic module wherein the contact surface between the at least one fin (11) and the back side (3b) corresponds to a fraction of the first area, said fraction being less than 50% of the first area, preferably less than 20%, and wherein the at least one fin has a thermal conductivity higher than 10 W.m-1.K-1.

According to another aspect of the invention, the distribution of the at least one fin is achieved so that any point of the back side is located at a distance shorter than twice the average height of the at least one fin from the at least one fin.
The bifacial solar panel may comprise an edge area without any fins. This edge area corresponds for example to the area which is located in a range of 5cm from the edge of the back side of the photovoltaic module

According to a further aspect of the invention, the at least one fin comprises a reflective surface configured for reflecting light in a specular manner.

According to a further aspect of the present invention, the at least one fin is arranged so that portions of the at least one fin having a common general direction in the plane of the back side extend outwardly with the same orientation with a tolerance of 10°. Such feature ensures that there is a direction of light for which the portion of the back side that is reached by the light rays without reflection on the fin corresponds with a given tolerance to the surface of the back side where there is no fin.

According to an additional aspect of the invention, the at least one fin comprises portions that are disposed parallel to each other. Parallelism is herein meant at the back side level (contact areas between the fin portions and the back side are parallel).

According to a further aspect of the invention, the at least one fin extends from the back side of the bi-facial photovoltaic module with an angle comprised between 80 and 100° with respect to the back side.

According to another aspect of the invention, the at least one fin comprise a flattened portion configured to be in contact with the back side of the at least one bi-facial photovoltaic module to increase the contact surface between the heat sink and the back side.

According to a further aspect of the invention, the at least one fin comprises a plurality of through holes distributed over the surface of the at least one fin.

According to an additional aspect of the invention, the at least one fin forms a grid.

According to a further aspect of the invention, the at least one fin is metallic.

According to a further aspect of the invention, the heat sink is glued to the back side of the at least one bi-facial photovoltaic module.

### Brief description of the drawings

[Fig. 1] is a diagram of a side view of a solar panel comprising a heat sink according to an embodiment of the present invention;
[Fig.2] is a diagram of a perspective view of the heat sink of figure 1;
[Fig.3] is a diagram of a top view of the heat sink according to a second embodiment;
[Fig.4] is a diagram of a top view of the heat sink according to a third embodiment;
[Fig. 5] is a diagram of a top view of the heat sink according to a fourth embodiment;
[Fig.6] is a diagram of a top view of the heat sink according to a fifth embodiment;
[Fig.7] is a diagram of a perspective view of the heat sink according to a sixth embodiment;
[Fig. 8] is a diagram of a top view of the heat sink according to a seventh embodiment;
[Fig.9] is a diagram of a top view of the heat sink according to an eighth embodiment;
[Fig. 10] is a diagram of a side view of a solar panel comprising a heat sink according to a ninth embodiment of the present invention;
[Fig.11] is a diagram of a side view of a solar panel comprising a heat sink according to a ninth embodiment of the present invention.
[Fig. 12] is a diagram of a top view of the heat sink according to a tenth embodiment;
[Fig. 13] is a diagram of a top view of the heat sink according to an eleventh embodiment;

### Detailed description of the invention

The following achievements are examples. Although, the specification refers to one or several embodiments, it does not imply that each reference refers to the same embodiment or that the features apply only to a single embodiment. Simple features of different embodiments can also be combined to provide other embodiments.

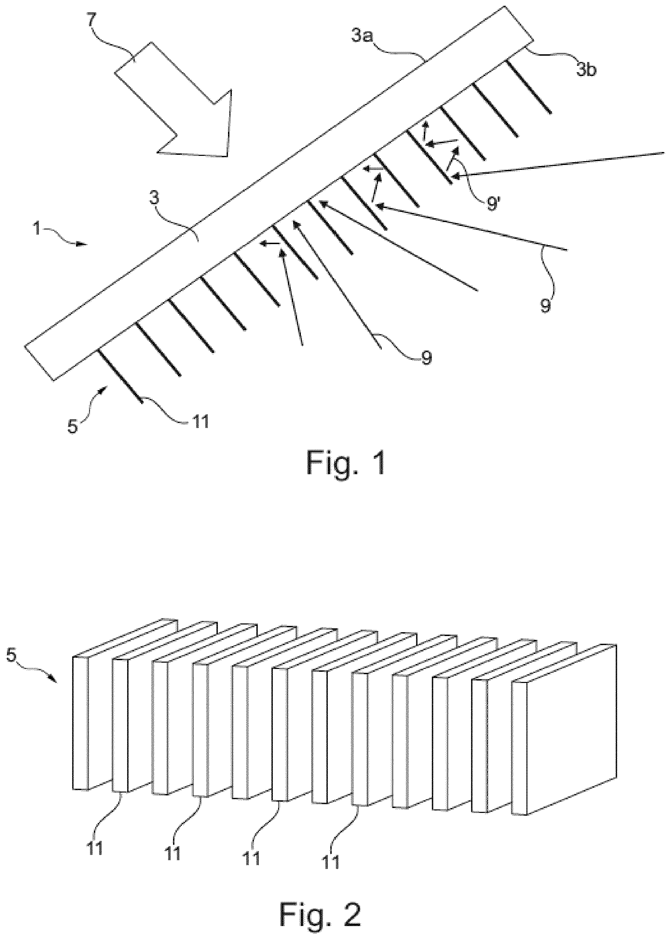

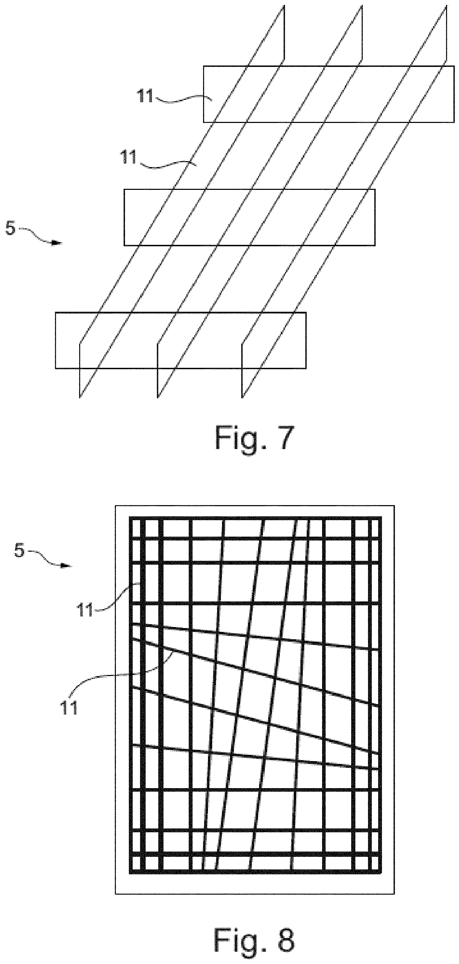

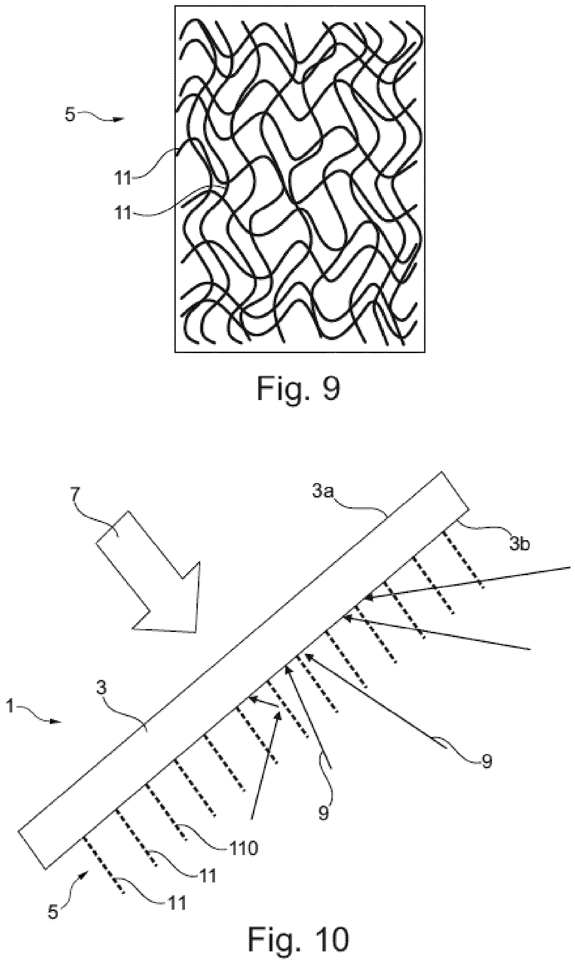

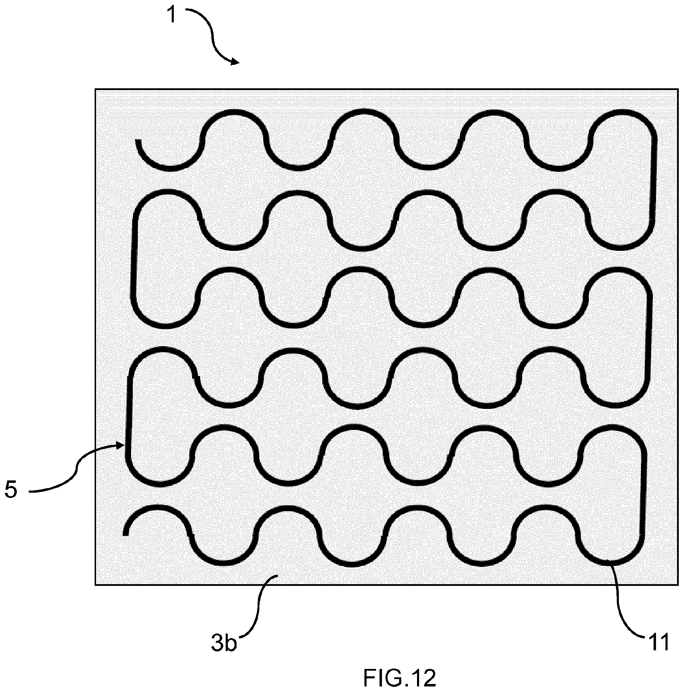

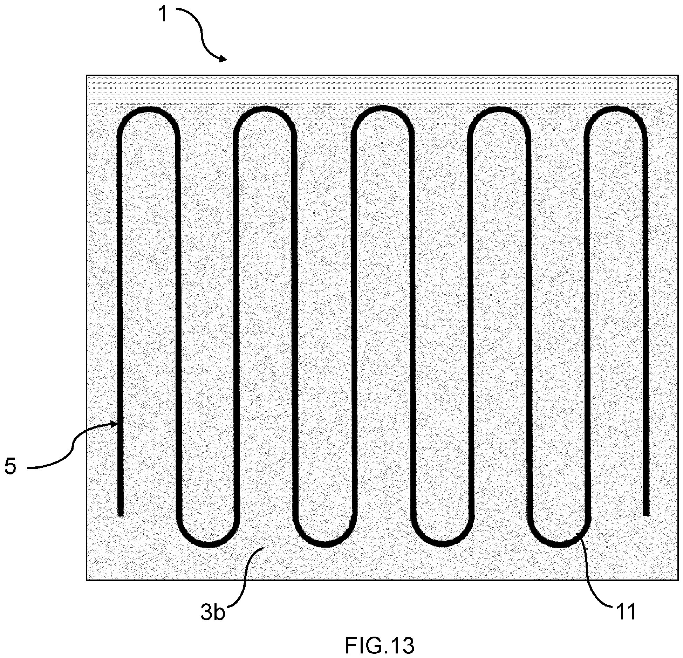

Fig.1 represents a diagram of a solar panel 1 comprising a bi-facial photovoltaic module 3 and a heat sink 5 disposed on the back side 3b of the bi-facial photovoltaic module. A bi-facial photovoltaic module refers to a photovoltaic module configured for receiving light from both faces, namely, the front face 3a corresponding to the upper face receiving solar rays directly from the sun as represented by the arrow 7 and the back face 3b corresponding to the lower face receiving reflected solar rays represented by the arrows 9. Reflection of the solar rays may be achieved on the ground or on any other surfaces reflecting a solar ray toward the back side 3b. The bi-facial photovoltaic module 3 is then configured for converting light or solar rays coming from both faces into electricity.
The heat sink 5 comprises at least one fin 11 which is disposed over the back side 3b of the bi-facial photovoltaic module 3 and which extends outwards from the back side 3b of the bi-facial photovoltaic module 3. Furthermore, the at least one fin 11 is distributed over the back side 3b of the photovoltaic module 3 so that a circular portion of the back side 3b surface without fin(s) covers at most a limited surface, for example a surface smaller than 5% of the total surface of the back side 3b. The at least one fin 11 is made of a material having a thermal conductivity equal or higher than 10 W.m-1.K-1. The fins 11 are for example metallic fins 11 made of aluminum or steel or any other metal. A heat sink 5 may be configured to be disposed on a single bi-facial photovoltaic module 3 or on a plurality of adjacent bi-facial photovoltaic modules 3.
Furthermore, the at least one fin 11 is arranged so that at least 50%, preferably at least 80%, of the back side 3b of the bi-facial photovoltaic module 3 is not covered by the fin 11, that is to say, at least 50% or 80% of the back side presents free surface that are not in contact with a fin 11, in order to enable reflected solar rays 9 to reach the bi-facial photovoltaic module 3 through the back side 3b.
Furthermore, in a preferred embodiment, the portions of the at least one fin having a common general direction in the plane of the back side extend outwardly with the same orientation with a tolerance of 10°. Such feature ensures that there is a direction of light for which the portion of the back side that is reached by the light rays (without reflection on the fin 11) corresponds with a given tolerance to the surface of the back side where there is no fin 11. In a simple case, parallel portions of the fin(s) have all the same tilt with respect to the back side 3b of the photovoltaic module 3.
In another preferred embodiment, the at least one fin 11 comprises a reflecting surface configured for reflecting solar rays in a specular manner in order to enable reflection of solar rays 9 impinging the solar panel 1 with an angle different than the angle of the fin 11 (with respect to the back in the case of a straight fin) to be reflected toward the back side 3b of the bi-facial photovoltaic module 3 as represented by the arrow 9'. The reflection may be obtained by the material itself or by a dedicated surface treatment or by a dedicated covering of a reflecting layer on the surface of the fin 11.

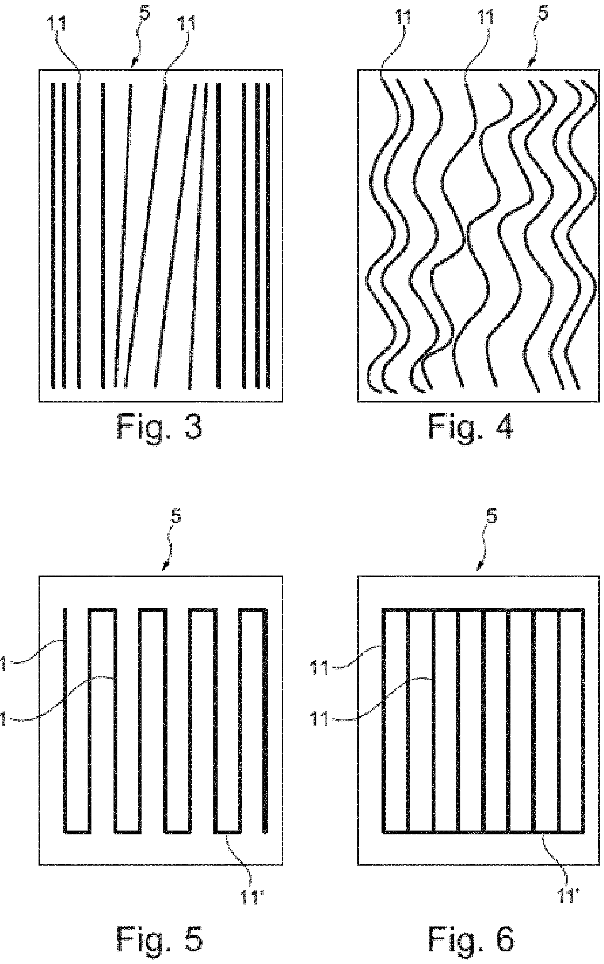

Figs. 1 and 2 represent an embodiment of a heat sink 5 comprising a plurality of parallel fins 11 extending perpendicularly with respect to the back side 3b. Indeed, preferably, the fins 11 extend outward with an angle comprised between 80° and 100°, notably 90°. The fins 11 may also have different angles between each other but preferably within a given tolerance, for example 10°. Fig. 3 represents a top view (in a direction perpendicular to the back side 3b) of a possible embodiment for which the fins 11 are not parallel to each other. The fins 11 are also not necessarily straight and may have curved portion as represented in the top view of fig.4.
In order to ease the manufacturing of the solar panels 1, the fins 11 may be linked to each other at their extremity to produce a single fin 11 as represented in the top views of fig. 5 and fig.6. The links 11' between the fins 11 may be achieved only on a portion of the height of the fins 11 or even only at the base of the fins 11 in order to limit the shadow produced by the links 11'. Fig.12 and Fig.13 represent example of a single fin having curved portions.
The cross-section of the fins 11 has preferably a rectangular shape to ease the manufacturing but other cross-sections may be adopted such as a trapezoidal shape.
Besides, the portion of the fins 11 configured to be in contact with the back side 3b of the bi-facial photovoltaic module 3 may comprise a flattened part to increase the contact surface between the fins 11 and the back side 3b of the bi-facial photovoltaic module 3 and to provide a pedestal to ease the fastening of the fins 11 to the bi-facial photovoltaic module 3.
The fins 11 may also be arranged as a grid with crossed fins 11 as represented in the perspective view of Fig.7. However, as for the embodiment of figs. 1 and 2, the fins 11 may also have different configurations, for example a straight shape but with angle which can be different than 0° and 180° between the fins 11 as represented in fig.8 or curved fins 11 as disclosed in fig.9. Other configurations of the fins 11 not represented in the figures may also be used within the scope of the present invention.
The height of the fins 11 may be determined based on their thermal conductivity. A higher conductivity enabling the use of higher fins 11 as the heat may be transferred along a longer portion of the fins 11 to be dissipated. The space between two adjacent fins 11 may also be determined based on the height and therefore based on the thermal conductivity of the fins 11. Indeed, with higher and more efficient fins 11, two adjacent fins may be separated by a larger distance to produce a similar efficiency. Furthermore, with higher fins 11, the shadow produced by the fins 11 is larger so that a greater distance between the fins 11 may be required to enable reflected solar rays 9 to reach the back side 3b of the bi-facial photovoltaic module 3. The distance between two adjacent fins 11 may for example be equal or higher than the height of the fins 11. The fins 11 may also have different heights from each other or shapes with different heights.
The distribution of the fin(s) 11 is achieved so that any point of the back side 3b is located for example at a distance shorter than twice the average height of the fin(s) 11 from the fin(s) 11. Such distribution ensure that the heat dissipation is achieved over the whole surface of the back side 3b so that no local hot point remains in the bi-facial photovoltaic module 3.
According to an embodiment of the present invention, the fins 11 are glued to the bi-facial photovoltaic module 3. In order to improve the efficiency of the heat sink 5, the thickness of glue may be limited, for example a thickness of less than 2 mm and the used glue may have thermal conductivity properties obtained for example by the addition of dedicated particles having a high thermal conductivity such as carbon fiber particles. The gluing of the fin(s) enables adapting the heat sink 5 on any types of bi-facial photovoltaic modules 3.
According to another embodiment represented in Fig.10, the fins 11 may comprise a plurality of through holes 110 distributed over the surface of the fins 11 in order to allow reflected solar rays 9 that are not parallel to the fins 11 to be transmitted toward the back side 3b of the bi-facial photovoltaic module 3 limiting therefore the shadowing impact of the heat sink 5. These through holes 110 may be adapted on any of the previous embodiments. Furthermore, the through holes 110 may be combined with the reflecting surface of the fins 11 in order to maximize the number of reflected solar rays 9 reaching the back side of the bi-facial photovoltaic module 3.
The number and the size of the through holes 110 may be adapted according to the thermal conductivity of the fins 11, a higher conductivity enabling a higher density of through holes 110. The through holes 110 may have a circular shape but any other shape may also be used.

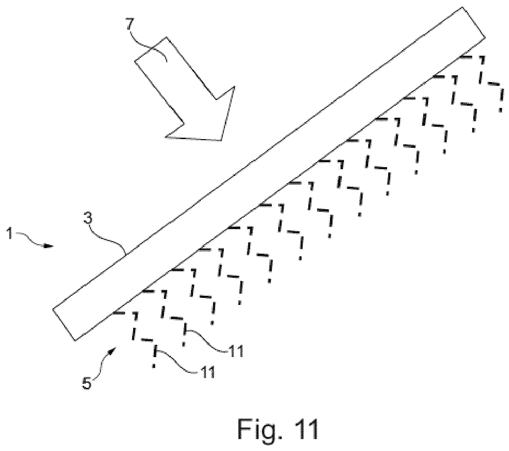

According to another embodiment represented in fig.11, the fins 11 may not be straight according to their height but may have broken line shape or curved shape. Such embodiment may be combined with the through hole feature or the reflective surface feature disclosed previously.

The use of a heat sink 5 arranged on the back side 3b of a bi-facial photovoltaic module 3 and comprising fins 11 extending outward from the said back side 3b and presenting large openings on the back side 3b enables dissipating efficiently the heat from the bi-facial photovoltaic module 3 while allowing most of the reflected solar rays 9 to reach the back side 3b of the bi-facial photovoltaic module 3 to be converted into electricity. Such heat sink 5 may be adapted to any bi-facial photovoltaic module 3 and does not require any external supply and can therefore be adapted to solar farms located in desert regions.

## Claims

1. Heat sink (5) for bifacial photovoltaic modules (3) configured to be secured to the back side (3b) of at least one bi-facial photovoltaic module (3) wherein the heat sink (5) comprises at least one fin (11) which extends outward from the back side (3b) and is distributed over a first area corresponding to the back side (3b) of the at least one bi-facial photovoltaic module (3) wherein the contact surface between the at least one fin (11) and the back side (3b) corresponds to a fraction of the first area, said fraction being less than 50% of the first area, preferably less than 20%, and wherein the at least one fin (11) has a thermal conductivity higher than 10 W.m-1.K-1.

2. Heat sink (5) in accordance with claim 1 wherein the distribution of the at least one fin (11) is achieved so that any point of the back side (3b) is located at a distance shorter than twice the average height of the at least one fin (11) from the at least one fin (11) when the heat sink (5) is secured to the back side (3b) of the at least one bi-facial photovoltaic module (3).

3. Heat sink (5) in accordance with one of the previous claims wherein the at least one fin (11) comprises a reflective surface configured for reflecting light in a specular manner.

4. Heat sink (5) in accordance with one of the previous claims wherein the at least one fin (11) is arranged so that portions of the at least one fin having a common general direction in the plane of the back side (3b) extend outwardly from the back side (3b) with the same tilt with a tolerance of 10° when the heat sink (5) is secured to the back side (3b) of the at least one bi-facial photovoltaic module (3).

5. Heat sink (5) in accordance with one of the previous claims wherein the at least one fin (11) comprises portions that are disposed parallel to each other.

6. Heat sink (5) in accordance with one of the previous claims wherein the at least one fin (11) extends from the back side (3b) of the bi-facial photovoltaic module (3) with an angle comprised between 80 and 100° with respect to the back side (3b) when the heat sink (5) is secured to the back side (3b) of the at least one bi-facial photovoltaic module (3).

7. Heat sink (5) in accordance with one of the previous claims wherein the at least one fin (11) comprises a flattened portion configured to be in contact with the back side (3b) of the at least one bi-facial photovoltaic module (3) to increase the contact surface between the heat sink (5) and the back side (3b).

8. Heat sink (5) in accordance with one of the previous claims wherein the at least one fin (11) comprises a plurality of through holes (110) distributed over the surface of the at least one fin (11).

9. Heat sink (5) in accordance with one of the previous claims wherein the at least one fin (11) forms a grid.

10. Heat sink (5) in accordance with one of the previous claims wherein the at least one fin (11) is metallic.

11. Solar panel (1) comprising at least one bi-facial photovoltaic module (3) and a heat sink (5) in accordance with one of the previous claims.

12. Solar panel (1) in accordance with the previous claim wherein the heat sink (5) is glued to the back side (3b) of the at least one bi-facial photovoltaic module (3).
